# EUROPÄISCHE PATENTANMELDUNG

(11) **EP 0 521 285 A1**
(43) Veröffentlichungstag der Anmeldung: **07.01.1993**
(21) Anmeldenummer: 92108607.0
(22) Anmeldetag: 21.05.1992
(51) Int. Cl.: F04D 25/08, H02K 9/06

(54) **Axialgebläse, insbesondere zur Kühlung eines dem Kühler eines Fahrzeugs vorgeordneten Kondensators einer Klimaanlage**

(30) Priorität: 03.07.1991 DE 4122018
(71) Anmelder: Licentia Patent-Verwaltungs-GmbH, D-60596 Frankfurt (DE)
(72) Erfinder: Hozak, Peter, W-2903 Bad Zwischenahn (DE)
(74) Vertreter: Vogl, Leo, Dipl.-Ing.

(57) **Zusammenfassung**

Die Axialgebläse zum Kühlen von Kondensatoren für Kraftfahrzeug-Klimaanlagen müssen aufgrund der Einbaulage zwischen Frontgrill und Kondensator/Kühleinheit einerseits sehr kompakt, aber andererseits auch leistungsfähig sein. Bei diesen hochausgenutzten Gebläseeinheiten muß die durch die dazu erforderliche hohe Versorgungsspannung bei hoher Umgebungstemperatur entstehende Verlustwärme aus dem Elektromotor (3) mittels Eigenbelüftung sicher abgeführt werden, wobei der Elektromotor (3) von einer Nabe mit einem topfförmigen Ansatzteil (17) umschlossen ist. Das Durchströmen des Elektromotors (3) mit Kühlluft wird erfindungsgemäß dadurch unterstützt, daß der Boden (35) des topfförmigen Ansatzteiles (17) Belüftungslöcher (37) aufweist, welche konzentrisch zu dem Lager (19) in dem topfförmigen Ansatzteil (17) der Nabe angeordnet sind. Hierdurch wird die Eigenbelüftung des Elektromotors (3) mit einfachsten Mitteln wesentlich verstärkt.

## Beschreibung

Die Erfindung betrifft ein Axialgebläse der im Oberbegriff des Patentanspruchs 1 angegebenen Art.

Die Hersteller von Gebläsen werden durch die von den Kunden vorgegebenen Parameter bezüglich Bauvolumen und Luftleistung zum Kühlen von Kondensatoren für Kraftfahrzeug-Klimaanlagen gezwungen, sehr kompakte und hochausgenutzte Gebläseeinheiten zu schaffen, wobei die Einbaulage im Fahrzeug zwischen Frontgrill und Kondensator-/Kühleinheit bezüglich Gestaltung und Schutzartanforderung nur eine den Antriebsmotor auf seiner ganzen Länge abdeckendes Flügelrad zuläßt. Außerdem muß die durch die hohe Versorgungsspannung bei hoher Umgebungstemperatur entstehende Verlustwärme aus dem Elektromotor mittels Eigenbelüftung sicher abgeführt werden.

So sind Axialgebläse zur Kühlung eines dem Kühler eines Kraftfahrzeuges vorgeordneten Kondensators einer Klimaanlage bekannt, bei denen die Nabe eines Gebläserades glockenförmig über den Elektromotor gezogen und mittels eines Lagers mit dessen Wellenende drehfest verbunden ist. Die Glockenform dieser Nabe behindert aber eine intensive Motorkühlung. Diese Kühlung des Motors wurde dadurch bereits verbessert, daß schaufelförmige Rippen auf der Gebläseradseite in der Nabe angeordnet werden. Hierdurch wird bei Rotation des Gebläserades eine Durchströmung des Elektromotors mit Kühlluft über Belüftungslöcher in dem B-seitigen Lagerschild zu Luftauslaßlöchern in dem A-seitigen Lagerschild bewirkt, wobei die aus den Luftauslaßlöchern heraustretende, erwärmte Kühlluft über den Zwischenraum zwischen der äußeren Umfangsfläche des Gehäusemantels des Elektromotors und der inneren, mit Rippen versehenen inneren Umfangsfläche der Nabe am B-seitigen Lagerschild ins Freie leitbar ist.

Außerdem treten bei den Gebläserädern mit den langen Naben an deren beiden Enden Unwuchterscheinungen auf, die wiederum zu erhöhten Geräuschbildungen führen.

Der Erfindung liegt die Aufgabe zugrunde, ein Axialgebläse der eingangs genannten Art zu vereinfachen und die Luftführung für eine intensivere Motorkühlung zu verbessern. Außerdem soll das Gebläse bei gutem Wirkungsgrad nur ein geringes Laufgeräusch aufweisen. Diese Aufgabe wird durch die im Patentanspruch 1 gekennzeichnete Erfindung gelöst.

Das Axialgebläse gewährleistet eine intensive Durchströmung des Motors mit Kühlluft, wobei die erforderlichen Schutzarten bezüglich Verschmutzung, Verletzungen sowie Geräuschen und Verschlechterung der Luftleistung beibehalten werden.

Auch wird durch die vorteilhafte Ausgestaltung des Erfindungsgegenstandes nach den Patentansprüchen 2 und 4 vermieden, daß Wasser oder sonstiger Schmutz über die Luftauslaßlöcher in die Nabe gelangen kann. Weiterhin wird die Luftströmung durch den Motor noch durch den Unterdruck unterstützt, der durch die vorbeiströmende Förderluft aus den Luftauslaßlöchern entsteht.

Die vorteilhafte Ausgestaltung des Erfindungsgegenstandes nach Patentanspruch 6 verhindert auf einfachste Weise eine Verletzungsgefahr bei laufendem Gebläserad für einen Kundendienstmechaniker.

Schließlich ermöglichen die vorteilhaften Weiterbildungen des Erfindungsgegenstandes nach den Patentansprüchen 13 bis 18 ein einfaches Auswuchten des Gebläserades sowohl auf der Flügelradseite als auch an dem freien Ende des becherförmigen Ansatzteiles.

Weitere vorteilhafte Ausgestaltungen sind den weiteren Unteransprüchen zu entnehmen. Es zeigen:
- Figur 1: Einzelteile des Axialgebläses in schaubildlicher Darstellung,
- Figur 2: eine Seiteneinsicht, teilweise im Schnitt und
- Figuren 3 bis 5: Einzelheiten aus den Figuren 1 und 2.

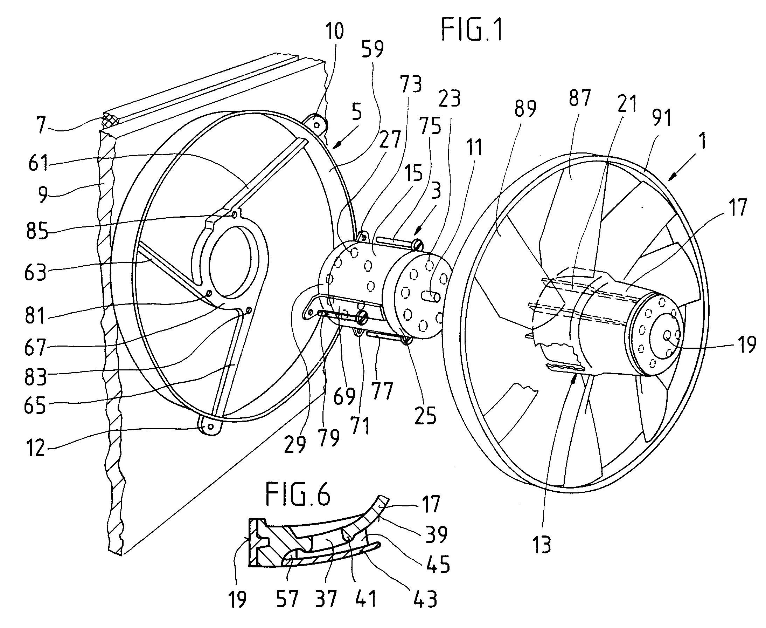

In der Figur 1 sind die wesentlichen Teile des Axialgebläses mit einem Gebläserad 1, einem als Gebläsemotor dienenden Elektromotor 3 und einem Halteelement 5 dargestellt, mit welchem das Axialgebläse zur Kühlung eines einem Kühler 7 eines Kraftfahrzeuges vorgeordneten Kondensators 9 einer Klimaanlage an dem Kondensator 9 z. B. mittels Laschen 10, 12 befestigbar ist.

Auf dem Wellenende 11 des Elektromotors 3 ist das Gebläserad 1 mittels eines an dessen Nabe 13 angeordneten und das dem Wellenende 11 zugekehrte Ende des Gehäusemantels 15 des Elektromotors 3 umgebenden, topfförmigen Ansatzteiles 17 mittels eines Preßlagers 19 drehfest befestigt ist. Die Nabe 13 umgibt das dem Wellenende 11 abgekehrte Ende des Gehäusemantels 15 des Elektromotors 3 derart, daß der Elektromotor 3 ganz umschlossen ist.

Weiterhin sind schaufelförmige Rippen 21 in der Nabe 13 auf der Gebläseradseite angeordnet, deren Rotation eine Durchströmung des Elektromotors mit Kühlluft über Belüftungslöcher 23 in dem B-seitigen Lagerschild 25 zu Luftauslaßlöchern 27 in dem A-seitigen Lagerschild 29 bewirkt. Hierbei wird die aus den Luftauslaßlöchern 27 heraustretende erwärmte Kühlluft über den Zwischenraum 28 zwischen der äußeren Umfangsfläche 31 des Gehäusemantels 15 des Elektromotors 3 und der inneren, mit Rippen 21 versehenen inneren Umfangsfläche 33 der Nahe 13 am B-seitigen Lagerschild 25 ins Freie geleitet. Diese Strömung der Kühlluft durch den Elektromotor 3 wird jedoch noch unterstützt durch den Unterdruck, der durch die vorbeiströmende Förderluft entsteht, wenn in Höhe der Luftauslaßlöcher 27 in dem A-seitigen Lagerschild 29 im Boden 35 des becherförmigen Ansatzteiles 17 zusätzliche Belüftungslöcher 37 vorgesehen werden. Diese Belüftungslöcher 37 sind konzentrisch zu dem Lager 19 in dem topfförmigen Ansatzteil 17 der Nabe 13 angeordnet. Damit Wasser nicht in die Belüftungslöcher 37 des Gebläserades 1 gelangen kann, sind umlaufende Wülste 41 axial am Lochende auf der Außenumfangsfläche 39 vorgesehen. Außerdem sind die Belüftungslöcher 37 noch durch einen Deckel 43 abgedeckt, wodurch ein Eindringen von Staub und Wasser verhindert wird. Der Deckel 43 wird mit einer der Löcheranzahl entsprechenden Schaufelzahl auf Abstand zu dem Boden 35 des Ansatzteiles 17 an der Nabe 13 gehalten. Diese Schaufeln bestehen aus schaufelförmigen Rippen 45, welche auf der Außenumfangsfläche 39 zwischen den Belüftungslöchern 37 angeordnet sind. Der Deckel 43 ist durch Reibschweißen mit den Rippen 45 verbunden und weist eine dem Krümmungsradius des becherförmigen Ansatzteiles 17 angepaßte Krümmung auf.

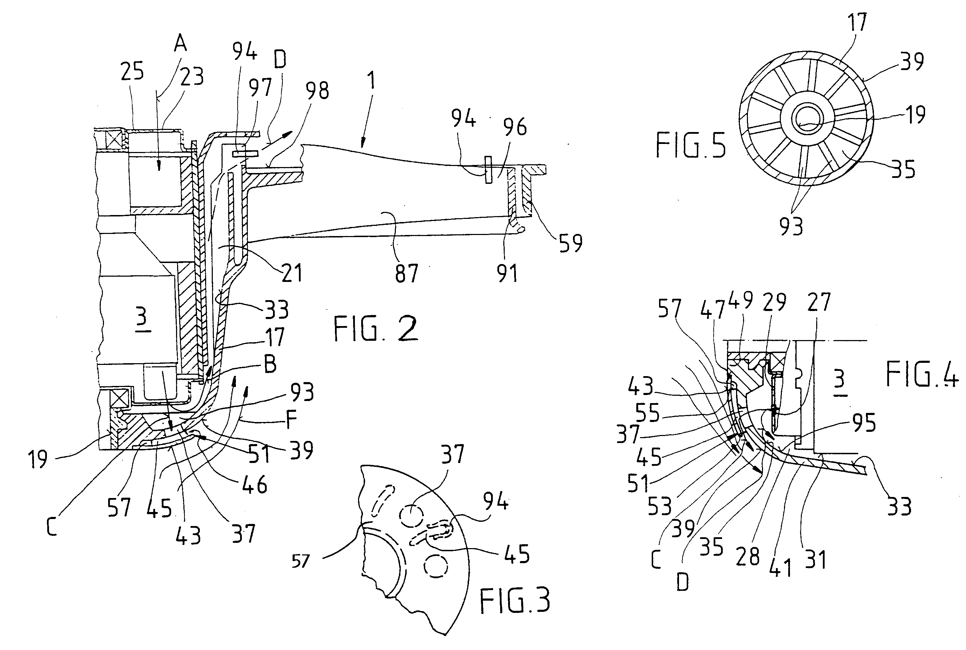

Der Deckel 43 ist außerdem mit einer Lagerbohrung 47 auf einem zapfförmigen Ansatz 49 auf dem becherförmigen Ansatzteil 17 gelagert. Der freie Rand 51 des Deckels 43 weist eine Abrundung 53 auf und ragt leicht über die schaufelförmigen Rippen 45 hinweg, wodurch Verletzungsgefahren an scharfen Kanten verhindert werden, siehe Figuren 2 und 3.

Am Boden des Zwischenraumes 55 ist ein Ringkanal 57 für Wasserablauf zwischen dem Deckel 43 und dem becherförmigen Ansatzteil 17 angeordnet, der unterhalb der Belüftungslöcher 37 und der schaufelförmigen Rippen 47 umlaufend ausgebildet ist.

Im Rahmen der Erfindung können die schaufelförmigen Rippen 45 auch mit der Unterseite des Deckels einstückig ausgebildet sein. In diesem Fall müssen dann die Rippen 45 mit der Außenumfangsfläche 39 des becherförmigen Ansatzteiles 17 z. B. mittels einer Schweißverbindung fest verbunden werden.

Nach der Befestigung des Elektromotors 3 an dem Halteelement 5 wird das Gebläserad 1 von einem Luftleitring 59 umgeben, der über Tragarme 61, 63, 65 an dem Lager 67 für den Elektromotor 3 abgestützt ist. An dem Gehäusemantel 15 des Elektromotors 3 sind abgewinkelte Befestigungslaschen 69, 71, 73 angeordnet, welche mittels Schrauben 75, 77, 79 an dem Lager 67 mit Gewindelöchern 81, 83, 85 fest verbunden sind. Auf dem äußeren Umfang der Nabe 13 sind eine Vielzahl von radial ausgerichteten Gebläseflügeln 87 gleichmäßig verteilt angeordnet, deren freie Enden 89 mit einem hohlzylinderförmigen Abschlußring 91 verbunden sind. Dieser Abschlußring 91 ist von dem Luftleitring 59 mit einem geringen Abstand umgeben.

Die Durchströmung des Elektromotors 3 mit Kühlluft wird noch dadurch unterstützt, daß der innere Boden 35 des becherförmigen Ansatzteiles 17 radial zu dem Lager 19 ausgerichtete schaufelförmige Rippen 93 aufweist.

Durch die vorteilhaften Ausgestaltungen des Erfindungsgegenstandes wird die unter hoher Versorgungsspannung bei hoher Umgebungstemperatur entstehende Verlustwärme aus dem Elektromotor 3 mittels Eigenbelüftung sicher abgeführt. Allerdings führt die lange Nabe 13 mit dem Ansatzteil 17 zu Unwuchterscheinungen, welche einen Wuchtausgleich sowohl auf der Flügelradseite als auch auf der Deckelseite des Gebläserades 1 erforderlich machen. Zu diesem Zweck weist das Gebläserad 1 auf dem A- und B-seitigen Ende des Elektromotors Aufnahmen für Ausgleichsmittels auf, welche z. B. aus verrastbaren Wuchtklammern 94 bestehen.

So werden die Wuchtklammern 94 auf die freien Enden 95 der Rippen 45 zwischen dem Deckel 43 und dem becherförmigen Ansatzteil 17 des Gebläserades 1 aufgesteckt. Die rippenförmigen Schaufeln 45 werden an ihren Enden nach außen hin leicht dicker, so daß von außen gesteckte Wuchtklammern 94 sich zusätzlich zu ihrer federnden Vorspannung bei Luftrotation sicher halten.

Auf der B-Seite können die Wuchtklammern 94 auf die äußeren Enden 96 der Gebläseflügel 87 unmittelbar unterhalb des Abschlußringes 91 oder auf die freien Enden 97 der schaufelförmigen Rippen 21 in der Nabe 13 aufgesteckt werden. Diese freien Enden 97 der Rippen 21 stehen gegenüber der Stirnfläche 98 der Nabe 13 auf der B-Seite des Lagerschildes 25 vor. Mit Hilfe der Wuchtklammern 94 ist ein schnelles und einfaches Auswuchten des Gebläserades 1 sowohl auf der Gebläseflügelradseite als auch auf der Deckelseite möglich.

Bei Rotation des Gebläserades 1 wird über die schaufelförmigen Rippen 21 ein Durchströmen des Elektromotors 3 von dessen B-Seite zur A-Seite in Pfeilrichtung A bewirkt. Die erwärmte Kühlluft wird beim Austreten aus den Luftauslaßlöchern 27 auf der A-Seite in die Teilluftströmungen B und C aufgeteilt. Die Teilluftströmung B gelangt über den Zwischenraum 28 zwischen dem Mantelgehäuse 31 des Elektromotors 3 und der Innenumfangsfläche 33 der Nabe 13 in Pfeilrichtung D ins Freie. Über die Rippen 45 wird die Teilluftströmung C mittels der Belüftungslöcher 37 abgezweigt. Diese Strömung wird noch durch den Unterdruck an den Austritts-Öffnungen 46 zwischen den Rippen 45 unterstützt, der durch die vorbeiströmende Förderluft in Pfeilrichtung F entsteht.

Das kompakte und leistungsfähige Axialgebläse zeichnet sich durch geringe Laufgeräusche und durch eine optimale Kühlung des Elektromotors 3 aus.

## Patentansprüche

1. Axialgebläse, insbesondere zur Kühlung eines dem Kühler eines Kraftfahrzeuges vorgeordneten Kondensators einer Klimaanlage, mit einem Elektromotor, auf dessen Wellenende eine Nabe eines Gebläserades mittels eines an der Nabe angeordneten und das dem Wellenende zugekehrte Ende des Gehäusemantels des Elektromotors umgebenden, topfförmigen Ansatzteiles mittels eines Lagers drehfest befestigt ist, wobei die Nabe das dem Wellenende zugekehrte Ende des Gehäusemantels des Elektromotors umgibt, und mit schaufelförmigen Rippen auf der Gebläseradseite in der Nabe, deren Rotation eine Durchströmung des Elektromotors mit Kühlluft über Belüftungslöcher in dem B-seitigen Lagerschild zu Luftauslaßlöchern in dem A-seitigen Lagerschild bewirkt, wobei die aus den Luftauslaßlöchern heraustretende, erwärmte Kühlluft über den Zwischenraum zwischen der äußeren Umfangsfläche des Gehäusemantels des Elektromotors und der inneren, mit Rippen versehenen inneren Umfangsfläche der Nabe am B-seitigen Lagerschild ins Freie leitbar ist, **dadurch gekennzeichnet,** daß der Boden (35) des topfförmigen Ansatzteiles (17) Belüftungslöcher (37) aufweist, die konzentrisch zu dem Lager (19) in dem topfförmigen Ansatzteil (17) der Nabe (13) angeordnet sind.

2. Axialgebläse nach Anspruch 1, **dadurch gekennzeichnet,** daß die Belüftungslöcher (37) auf der Außenumfangsfläche (39) des becherförmigen Ansatzteiles (17) umlaufende Wülste (41) aufweisen.

3. Axialgebläse nach Anspruch 2, **dadurch gekennzeichnet,** daß schaufelförmige Rippen (45) zwischen den Belüftungslöchern (37) auf der Außenumfangsfläche (39) des topfförmigen Ansatzteiles (17) angeordnet sind.

4. Axialgebläse nach Anspruch 2 oder 3, **dadurch gekennzeichnet,** daß die Belüftungslöcher (37) und die Rippen (45) durch einen Deckel (43) abdeckbar sind, welcher eine dem Krümmungsradius des topfförmigen Ansatzteiles (17) angepaßte Krümmung aufweist.

5. Axialgebläse nach Anspruch 4, **dadurch gekennzeichnet,** daß der Deckel (43) mit einer Lagerbohrung (47) auf einem zapfförmigen Ansatz (49) an dem topfförmigen Ansatzteil (17) befestigt ist.

6. Axialgebläse nach Anspruch 5, **dadurch gekennzeichnet,** daß der freie Rand (51) des Deckels (43) eine Abrundung (53) aufweist und leicht über die schaufelförmigen Rippen (45) hinausragt.

7. Axialgebläse nach Anspruch 4, 5 oder 6, **dadurch gekennzeichnet,** daß ein Ringkanal (57) für Wasserablauf am Boden des Zwischenraumes (55) zwischen dem Deckel (43) und dem topfförmigen Ansatz (17) angeordnet ist, der unterhalb der Belüftungslöcher (37) und der schaufelförmigen Rippen (45) umlaufend angeordnet ist.

8. Axialgebläse nach einem der Ansprüche 3 bis 7, **dadurch gekennzeichnet,** daß die schaufelförmigen Rippen (45) an der Unterseite des Deckels angeordnet sind.

9. Axialgebläse nach einem der Ansprüche 3 bis 7, **dadurch gekennzeichnet,** daß die schaufelförmigen Rippen (45) an dem äußeren Umfang des topfförmigen Ansatzteiles (17) angeordnet sind.

10. Axialgebläse nach einem der vorhergehenden Ansprüche mit einem das Gebläserad umgebenden Luftleitring, der über Tragarme an dem Lager für den Elektromotor abgestützt und Bestandteil des Halteelementes zur Halterung des Gebläses am Kondensator der Klimaanlage ist, **dadurch gekennzeichnet,** daß eine Vielzahl von radial ausgerichteten Gebläseflügeln (87) auf dem äußeren Umfang der Nabe (13) gleichmäßig verteilt angeordnet sind, deren freie Enden (89) mit einem hohlzylinderförmigen Abschlußring (91) verbunden sind, welcher von dem Luftleitring (59) umgeben ist.

11. Axialgebläse nach einem der vorhergehenden Ansprüche, **dadurch gekennzeichnet,** daß der Boden (35) des topfförmigen Ansatzteiles (17) radial zu dem Lager (19) ausgerichtete, schaufelförmige Rippen (93) aufweist.

12. Axialgebläse nach einem der vorhergehenden Ansprüche, **dadurch gekennzeichnet,** daß die in der inneren Umfangsfläche (33) der Habe (13) angeordneten schaufelförmigen Rippen (21) mit freien Enden (97) gegenüber der Stirnfläche (98) der Habe (13) auf der B-Seite des Lagerschildes (25) vorstehen.

13. Axialgebläse nach einem der vorhergehenden Ansprüche, **dadurch gekennzeichnet,** daß das Gebläserad (1) auf dem A- und B-seitigen Ende des Elektromotors (3) Aufnahmen für Ausgleichsmittel zur Unwuchtbeseitigung aufweist.

14. Axialgebläse nach Anspruch 13, **dadurch gekennzeichnet,** daß die Ausgleichsmittel aus verrastbaren Wuchtklammern (94) bestehen.

15. Axialgebläse nach Anspruch 14, **dadurch gekennzeichnet,** daß die Wuchtklammern (94) auf die freien Enden (95) der Rippen (45) zwischen dem Deckel (43) und dem topfförmigen Ansatzteil (17) des Gebläserades (1) aufsteckbar sind.

16. Axialgebläse nach Anspruch 14, **dadurch gekennzeichnet,** daß die Wuchtklammern (94) auf die freien Enden (97) der schaufelförmigen Rippen (21) in der Nabe (13) aufsteckbar sind.

17. Axialgebläse nach Anspruch 14, **dadurch gekennzeichnet,** daß die Wuchtklammern (94) auf die äußeren Enden (96) der Gebläseflügel (87) unmittelbar unterhalb des Abschlußringes (91) aufsteckbar sind.

18. Axialgebläse nach Anspruch 15, **dadurch gekennzeichnet,** daß die rippenförmigen Schaufeln (45) an den Enden (95) nach außen hin leicht dicker werden.

19. Axialgebläse nach einem der vorhergehenden Ansprüche, **dadurch gekennzeichnet,** daß das Gebläserad (1) aus Kunststoff besteht.
